(19) Europäisches Patentamt
European Patent Office
Office européen des brevets

(11) **EP 3 604 875 B1**

(12) **EUROPEAN PATENT SPECIFICATION**

(45) Date of publication and mention
of the grant of the patent:
**27.11.2024 Bulletin 2024/48**

(21) Application number: **18777935.0**

(22) Date of filing: **09.03.2018**

(51) International Patent Classification (IPC):
**F16K 11/065** *(2006.01)*   **F16K 3/26** *(2006.01)*
**F16K 31/06** *(2006.01)*   **F16K 11/07** *(2006.01)*
**F16K 39/04** *(2006.01)*   **G05D 7/06** *(2006.01)*

(52) Cooperative Patent Classification (CPC):
**F16K 11/0716; F16K 31/0613; F16K 39/04;
G05D 7/0635**

(86) International application number:
**PCT/JP2018/009207**

(87) International publication number:
**WO 2018/180367 (04.10.2018 Gazette 2018/40)**

(54) **ELECTROMAGNETIC PROPORTIONAL VALVE**

ELEKTROMAGNETISCHES PROPORTIONALVENTIL

SOUPAPE PROPORTIONNELLE ÉLECTROMAGNÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2017   JP 2017061439**

(43) Date of publication of application:
**05.02.2020 Bulletin 2020/06**

(73) Proprietor: **Nabtesco Corporation**
**Tokyo 102-0093 (JP)**

(72) Inventors:
• **IWASAKI Hitoshi**
**Kobe-shi**
**Hyogo 651-2413 (JP)**

• **NISHIDA Yuhei**
**Kobe-shi**
**Hyogo 651-2413 (JP)**

(74) Representative: **Grünecker Patent- und
Rechtsanwälte
PartG mbB
Leopoldstraße 4
80802 München (DE)**

(56) References cited:
**JP-A- 2017 020 541     JP-U- S5 338 034
US-A1- 2015 000 774     US-B2- 7 503 347
US-B2- 8 607 823     US-B2- 9 395 013**

## Description

## TECHNICAL FIELD

The present invention relates to an electromagnetic proportional valve.

## BACKGROUND

An electromagnetic proportional valve as described in the preamble of claim 1 is already known from US2015/0000774A1. A spool-type electromagnetic proportional valve is known to control a supply pressure of a pressure oil in accordance with an excitation current. In a spool-type electromagnetic proportional valve, a spool body arranged slidably in a valve body is combined with an electromagnetically driven plunger. The plunger presses the spool body in accordance with application of the excitation current to adjust the position of the spool body with respect to the valve body, thereby to control supply and discharge of the pressure oil to and from flow passages formed in the valve body. Therefore, as a larger oil pressure acts on the spool body, the force applied from the plunger to the spool body needs to be larger. One way to obtain such a large force is to enlarge a solenoid actuator that electromagnetically drives the plunger, but a larger size of the solenoid actuator unfavorably results in larger manufacturing costs and larger installation space.

In the electromagnetic proportional valve disclosed in Patent Literature 1, the spool has difference between pressure-receiving areas, and the oil pressure on the outlet side is determined by the difference between pressure-receiving areas and the thrust of a proportional solenoid. Therefore, in the electromagnetic proportional valve of Patent Literature 1, an increase can be suppressed in the thrust of the proportional solenoid required to increase the oil pressure, and a smaller proportional solenoid can be used to output a higher oil pressure.

## RELEVANT REFERENCES

## LIST OF RELEVANT PATENT LITERATURE

Patent Literature 1: Japanese Patent Application Publication No. Hei 2-163583

## SUMMARY

As described above, in the electromagnetic proportional valve of Patent Literature 1, a small solenoid can be used to output a high oil pressure, but it is required to arrange an inlet port, an outlet port, and a drain port in the spool axis direction. Therefore, the electromagnetic proportional valve of Patent literature 1 needs to have a sufficient axial length to arrange these ports, and thus it is difficult to reduce its size with a smaller axial length.

Further, the electromagnetic proportional valve of Patent Literature 1 needs to have the outlet port disposed between the inlet port and the drain port, and therefore, the position of the outlet port in the axial direction is restricted, and the outlet port needs to face in the radial direction perpendicular to the axial direction. With the electromagnetic proportional valve of Patent Literature 1, it is necessary to dispose a hydraulic actuator that communicates with the outlet port under the above restrictions concerning the installation of the outlet port. This is unfavorable for device layout.

The present invention has been made in view of the above-mentioned circumstances, and one object of the present invention is to provide a compact electromagnetic proportional valve. Another object of the present invention is to provide an electromagnetic proportional valve favorable for device layout.

The objects are solved by the electromagnetic proportional valve according to claim 1. Preferred embodiments are claimed in the dependent claims.

## ADVANTAGES

According to the invention, the large-diameter bore portion communicates with the spool bore via one of the communication hole and the output hole, and the small-diameter bore portion communicates with the spool bore via the other. Thus, it is not necessary that the communication hole and the output hole are open in the radial direction. Further, it is not necessary that the communication hole and the output hole are arranged in the axial direction of the spool body. Therefore, the electromagnetic proportional valve can be compact. This is also favorable for device layout.

## BRIEF DESCRIPTION OF THE DRAWINGS

Fig. 1A is a sectional view showing a schematic arrangement of a positive-type electromagnetic proportional valve (not claimed).

Fig. 1B is a sectional view showing a schematic arrangement of a positive-type electromagnetic proportional valve (not claimed).

Fig. 1C is a sectional view showing a schematic arrangement of a positive-type electromagnetic proportional valve (not claimed).

Fig. 2 shows a specific example of a positive-type electromagnetic proportional valve (not claimed).

Fig. 3A is a sectional view showing a schematic arrangement of a negative-type electromagnetic proportional valve according to the invention.

Fig. 3B is a sectional view showing a schematic arrangement of a negative-type electromagnetic proportional valve according to the invention.

Fig. 3C is a sectional view showing a schematic arrangement of a negative-type electromagnetic proportional valve according to the invention.

Fig. 4 shows a specific example of a negative-type electromagnetic proportional valve according to an embodiment of the present invention.

## DESCRIPTION OF THE EMBODIMENTS

With reference to the appended drawings, a description is given of an embodiment of the present invention.

An electromagnetic proportional valve that can control a supply pressure of a pressure oil in accordance with an excitation current is connected to a hydraulic apparatus such as a hydraulic actuator and supplies a pressure oil to the hydraulic apparatus at a desired pressure. The pressure oil mentioned herein is not limited to oils such as mineral oils but may refer to the whole range of fluids (liquids in particular) that can be used as an energy transmission medium.

Typical electromagnetic proportional valves include positive-type electromagnetic proportional valves and negative-type electromagnetic proportional valves. Electromagnetic proportional valves that output a larger pressure of a pressure oil (that is, an oil pressure) as the excitation current is larger are classified as positive-type electromagnetic proportional valves, and electromagnetic proportional valves that output a smaller pressure of a pressure oil are classified as negative-type electromagnetic proportional valves

The present invention is applicable to the negative-type electromagnetic proportional valves. The following description will first relate to the positive-type electromagnetic proportional valves (not claimed) and then to the negative-type electromagnetic proportional valves.

< Positive-type Electromagnetic Proportional Valve > (not claimed)

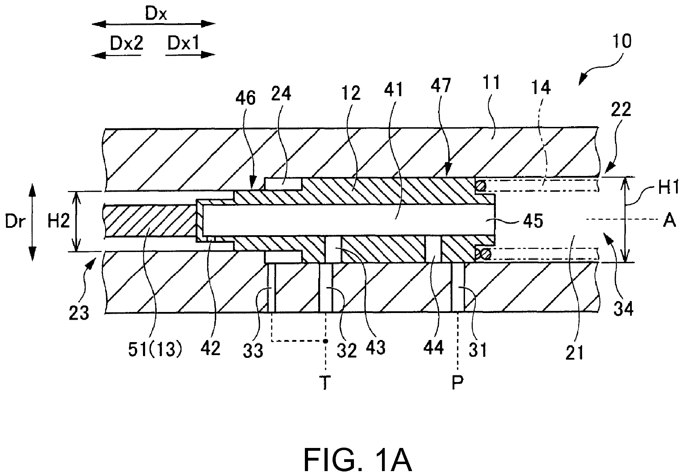

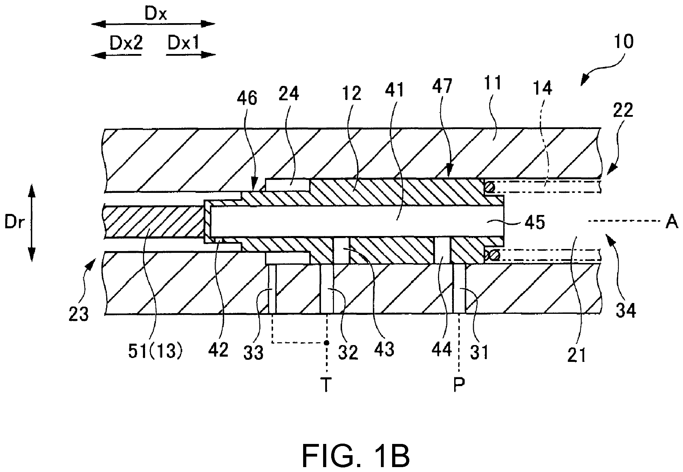

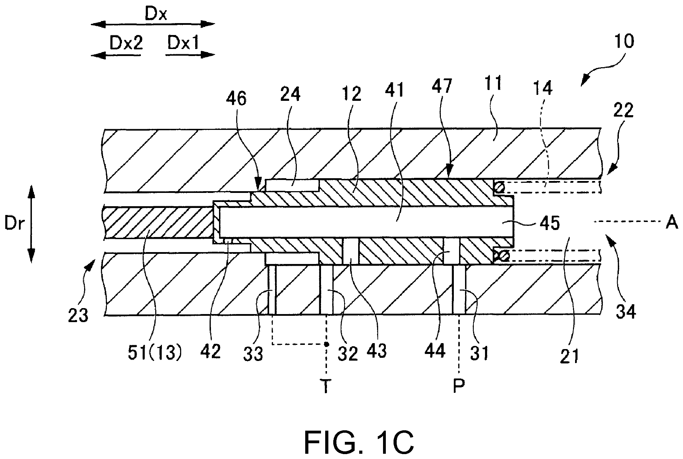

Figs. 1A to 1C are sectional views each showing a schematic arrangement of a positive-type electromagnetic proportional valve 10. Fig. 1A shows a non-excited state where no excitation current flows through a drive portion 13 constituted by a solenoid actuator. Fig. 1B shows a state where a relatively small excitation current flows through the drive portion 13 and a spool body 12 is in a neutral position. Fig. 1C shows a state where a relatively large excitation current flows through the drive portion 13.

The electromagnetic proportional valve 10 shown in Figs. 1A to 1C includes a valve body 11, the spool body 12, the drive portion 13, and a biasing portion 14.

The valve body 11 includes a valve bore 21 extending in the axial direction Dx, and an inlet port 31, an outlet port 32, a drain port 33, and an output port 34 each being open to the valve bore 21. The inlet port 31 communicates with an oil pressure source P that supplies a pressure oil, and the outlet port 32 communicates with a discharge portion T to which the pressure oil is discharged. The drain port 33 communicates with a drain portion to which the pressure oil is discharged. In the electromagnetic valve 10 shown in Figs. 1A to 1C, the discharge portion T serves as a drain portion, and the outlet port 32 and the drain port 33 communicate with the common discharge portion (that is, the drain portion). The output port 34 communicates with a hydraulic actuator A to which the pressure oil is supplied. Specific configuration of the hydraulic actuator A is not limited, and the hydraulic actuator A is typically formed of a hydraulic cylinder or a hydraulic motor.

The valve bore 21 includes a large-diameter bore portion 22 and a small-diameter bore portion 23, the large-diameter bore portion 22 having a first diameter H1 in the radial direction Dr perpendicular to the axial direction Dx, the small-diameter bore portion 22 having a second diameter H2 smaller than the first diameter H1 in the radial direction Dr. The large-diameter bore portion 22 is adjacent to the forward axial direction Dx1 side of the small-diameter bore portion 23. One end side of the spool body 12 is positioned in the large-diameter bore portion 22, and the other end side of the spool body 12 is positioned in the small-diameter bore portion 23. Although not explicitly shown in Figs. 1A to 1C, each of the large-diameter bore portion 22 and the small-diameter bore portion 23 forms a closed space and is filled with the pressure oil supplied from the oil pressure source P. The large-diameter bore portion 22 communicates with an outside (in particular, the hydraulic actuator A in the embodiment) via the output port 34 (in particular, the output port 34 open toward the forward axial direction Dx1).

In the large-diameter bore portion 22, a drain space 24 enclosed by a small-diameter spool portion 46, a large-diameter spool portion 47, and the valve body 11 has a volume varied in accordance with the position of the spool body 12 in the axial direction Dx, but the drain space 24 communicates with the drain port 33 irrespective of the position of the spool body 12 in the axial direction Dx. Therefore, irrespective of the position of the spool body 12 in the axial direction Dx, the pressure oil in the drain space 24 flows out to the discharge portion T via the drain port 33, and the valve body 11 and the spool body 12 do not receive a pressure from the pressure oil in the drain space 24.

The spool body 12 is disposed in the valve bore 21 so as to be slidable in the axial direction Dx. One end side (the right side in the Figs. 1A to 1C) of the spool body 12 is positioned in the large-diameter bore portion 22, and the other end side (the left side in the Figs. 1A to 1C) of the spool body 12 is positioned in the small-diameter bore portion 23. The one end side of the spool body 12 positioned in the large-diameter bore portion 22 includes the large-diameter spool portion 47 which has an outer diameter corresponding to the diameter of the large-diameter bore portion 22. The other end side of the spool body 12 positioned in the small-diameter bore portion 23 includes the small-diameter spool portion 46 which has an outer diameter corresponding to the diameter of the small-diameter bore portion 23. In this way, the large-diameter spool portion 47 is adjacent to the forward axial direction Dx1 side of the small-diameter spool portion 46 and is positioned in the large-diameter bore portion 22. At least a part of the small-diameter spool portion 46 is positioned in the small-diameter bore portion 23, and a part of the small-diameter spool portion 46 is positioned in the large-diameter bore portion 22 in accordance with the position of the spool body 12 in the axial direction Dx.

The large-diameter spool portion 47 is in a tight contact with an inner wall surface of the valve body 11 (in particular, an inner wall surface forming the large-diameter bore portion 22) to such a degree as to allow sliding of the spool body 12 in the axial direction Dx. The small-diameter spool portion 46 is in a tight contact with the inner wall surface of the valve body 11 (in particular, an inner wall surface forming the small-diameter bore portion 23) to such a degree as to allow sliding of the spool body 12 in the axial direction Dx. The pressure oil in the valve bore 21 does not pass between the large-diameter spool portion 47 and the valve body 11 and between the small-diameter spool portion 46 and the valve body 11. Therefore, the pressure oil does not flow from the small-diameter bore portion 23 to the drain space 24, or only a minute amount of pressure oil flows from the small-diameter bore portion 23 to the drain space 24. Likewise, the pressure oil does not flow from the large-diameter bore portion 22 to the drain space 24, or only a minute amount of pressure oil flows from the large-diameter bore portion 22 to the drain space 24.

The spool body 12 includes a spool bore 41 extending in the axial direction Dx, and a communication hole 42, an outlet hole 43, an inlet hole 44, and an output hole 45 each being open to the spool bore 41. In the embodiment, the communication hole 42 and the output hole 45 are formed in opposite end portions of the spool body 12, and the outlet hole 43 and the inlet hole 44 are formed in a portion of the spool body 12 between the communication hole 42 and the output hole 45. That is, the output hole 45 is formed in one of one end side and the other end side of the spool body 12 (the large-diameter spool portion 47 side in Figs. 1A to 1C), and the communication hole 42 is formed in the other (the small-diameter spool portion 46 side in Figs. 1A to 1C). The outlet hole 43 and the inlet hole 44 are formed in the large-diameter spool portion 47 of the spool body 12, and the outlet hole 43 and the inlet hole 44 are positioned between the communication hole 42 and the output hole 45 with respect to the axial direction Dx.

The communication hole 42, the outlet hole 43, and the inlet hole 44 are open in the radial direction Dr. In particular, the communication hole 42 is open to the small-diameter bore portion 23 and thus communicates between the small-diameter bore portion 23 and the spool bore 41 irrespective of the position of the spool body 12 in the axial direction Dx. In accordance with the position of the spool body 12 in the axial direction Dx, the outlet hole 43 is open toward the outlet port 32 or the inner wall surface of the valve body 11 (in particular, the inner wall surface forming the large-diameter bore portion 22), and the inlet hole 44 is open toward the inlet port 31 or the inner wall surface of the valve body 11 (in particular, the inner wall surface forming the large-diameter bore portion 22).

The output hole 45 is open in the axial direction Dx (the forward axial direction Dx1 in Figs. 1A to 1C) and communicates with the output port 34 via the valve bore 21 (in particular, the large-diameter bore portion 22). The large-diameter bore portion 22 connected to the hydraulic actuator A via the output port 34 communicates with the spool bore 41 via one of the communication hole 42 and the output hole 45 (via the output hole 45 in Figs. 1A to 1C). The small-diameter bore portion 23 communicates with the spool bore 41 via the other of the communication hole 42 and the output hole 45 (via the communication hole 42 in Figs. 1A to 1C). Accordingly, the large-diameter bore portion 22 and the small-diameter bore portion 23 in the valve bore 21 communicate with each other via the spool bore 41, the communication hole 42, and the output hole 45, and therefore, the pressure of the pressure oil in the large-diameter bore portion 22, the pressure of the pressure oil in the small-diameter bore portion 23, and the pressure of the pressure oil in the spool bore 41 are equal.

The drive portion 13 presses the spool body 12 in the forward direction Dx1 of the axial direction Dx (hereinafter also referred to as "the forward axial direction Dx1"), and a pressing force for pressing the spool body 12 varies in accordance with the applied electric current (that is, the excitation current). The drive portion 13 of the embodiment is formed of a solenoid actuator including an electromagnet (not shown) and a plunger 51 combined together. The specific configuration of the solenoid actuator is not limited, and the drive portion 13 may be formed of any solenoid actuator in which the pressing force applied to the spool body 12 by the plunger 51 is determined in accordance with the magnitude of the excitation current.

The biasing portion 14 biases the spool body 12 (the large-diameter spool portion 47 in the embodiment) toward the reverse direction Dx2 (hereinafter also referred to as "the reverse axial direction Dx2") opposite to the forward direction Dx1 of the axial direction Dx. The force applied to the spool body 12 by the biasing portion 14 varies in accordance with the position of the spool body 12 in the axial direction Dx, and as the spool body 12 moves toward the forward axial direction Dx1 side, the force applied to the spool body 12 by the biasing portion 14 is larger. The biasing portion 14 may be formed of an elastic member, such as, typically, a coil spring. A coil spring is made of a linear material (wire) wound spirally.

In this way, one of the one end side and the other end side of the spool body 12 (the small-diameter spool portion 46 side in Figs. 1A to 1C) is pressed by the plunger 51 of the drive portion 13, and the drive portion 13 applies a force to the spool body 12 in the forward axial direction Dx1. The other of the one end side and the other end side of the spool body 12 (the large-diameter spool portion 47 side in Figs. 1A to 1C) has the output hole 45 formed therein and is biased by the biasing portion 14, and the biasing portion 14 applies a force to the spool body 12 in the reverse axial direction Dx2.

The positive-type electromagnetic proportional valve 10 configured as described above has difference between pressure-receiving areas on the opposite sides of the spool body 12. With a balance between the hydraulic pressure produced by the difference between pressure-receiving areas, the thrust of the drive portion 13, and the biasing force of the biasing portion 14, the pressure oil having a desired pressure can be supplied from the output hole 45 to the hydraulic actuator A.

That is, the surface area of the spool body 12 that receives a force from the pressure oil filled in the valve bore 21 and the spool bore 41 in the forward axial direction Dx1 is different from the surface area of the spool body 12 that receives a force from the pressure oil in the reverse axial direction Dx2. More specifically, the surface area of the spool body 12 that receives a force from the pressure oil in the reverse axial direction Dx2 is larger than the surface area of the spool body 12 that receives a force from the pressure oil in the forward axial direction Dx1.

Therefore, the force F1 (the hydraulic pressure) imparted to the spool body 12 by the pressure oil in the forward axial direction Dx1 is different from the force F2 imparted to the spool body 12 by the pressure oil in the reverse axial direction Dx2. In the electromagnetic proportional valve 10 shown in Figs. 1A to 1C, the relationship F1 < F2 is satisfied. Thus, the spool body 12 receives the force in the reverse axial direction Dx2 from the pressure oil filled in the valve bore 21 and the spool bore 41. More specifically, the spool body 12 receives a force F0 from the pressure oil in the reverse axial direction Dx2, the force F0 being calculated from F0 = F2 - F1 = {(the surface area of the spool body 12 that receives the force from the pressure oil in the reverse axial direction Dx2) - (the surface area of the spool body 12 that receives a force from the pressure oil in the forward axial direction Dx1)} × (the pressure of the pressure oil).

The spool body 12 further receives a force from the plunger 51 of the drive portion 13 and the biasing portion 14. With Ph representing the pressure of the pressure oil in the valve bore 21 and the spool bore 41, Up representing the difference between the surface area S1 of the spool body 12 that receives the force from the pressure oil in the valve bore 21 and the spool bore 41 in the forward axial direction Dx1 and the surface area S2 of the spool body 12 that receives the force from the pressure oil in the reverse axial direction Dx2 (Up = S2 - S1), Fd representing the force imparted to the spool body 12 by the drive portion 13 in the forward axial direction Dx1, and Fsp representing the force imparted to the spool body 12 by the biasing portion 14 in the reverse axial direction Dx2, Expression 1 is satisfied as below.

$$\text{Expression 1: } Fd = Ph \times Up + Fsp$$

In the actual electromagnetic proportional valve 10, the value of Up is basically constant. In the electromagnetic proportional valve 10 of the embodiment in which the pressure oil is supplied to or discharged from the spool bore 41 and the valve bore 21 in accordance with the position of the spool body 12 in the axial direction Dx, the value of Fsp is within a certain range. Therefore, as is obvious from Expression 1 above, the pressure Ph of the pressure oil in the valve bore 21 and the spool bore 41 increases with the increase of the force Fd imparted to the spool body 12 by the drive portion 13. Accordingly, a control unit (not shown) controls the excitation current applied to the drive portion 13 to adjust the force (Fd) imparted to the spool body 12 by the drive portion 13, such that the pressure oil having a desired pressure can be supplied to the hydraulic actuator A from the output hole 45 via the large-diameter portion 22 and the output port 34.

Next, a description is given of the behavior of the positive-type electromagnetic proportional valve 10 described above.

When no electric current is applied to the drive portion 13 or a first electric current is applied to the drive portion 13, the spool body 12 is positioned at a first slide position shown in Fig. 1A. At this time, the spool bore 41 communicates with the outlet port 32 via the outlet hole 43, and the pressure oil in the spool bore 41 and the pressure oil in the valve bore 21 have a decreased pressure.

When a second electric current larger than the first electric current is applied to the drive portion 13, the spool body 12 is pressed by the plunger 51 of the drive portion 13 in the forward axial direction Dx1 and moved into a second slide position shown in Fig. 1C. At this time, the spool bore 41 communicates with the inlet port 31 via the inlet hole 44, and the pressure oil from the oil pressure source P is supplied to the spool bore 41. Therefore, the pressure oil in the spool bore 41 and the pressure oil in the valve bore 21 have an increased pressure. As described above, in the electromagnetic proportional valve 10 of the embodiment, the spool body 12 positioned in the first slide position (see Fig. 1A) is positioned on the reverse axial direction Dx2 side of the spool body 12 positioned in the second slide position (see Fig. 1C).

When a third electric current larger than the first electric current and smaller than the second electric current is applied to the drive portion 13, the spool body 12 is positioned in a third slide position (a neutral position) shown in Fig. 1B. At this time, the outlet hole 43 does not communicate with the outlet port 32, and the inlet hole 44 does not communicate with the inlet port 31. Thus, the spool bore 41 is disconnected from the inlet port 31 and the outlet port 32, and the pressure of the pressure oil in the spool bore 41 and the pressure oil in the valve bore 21 is basically maintained without a decrease or an increase thereof.

As described above, in the positive-type electromagnetic proportional valve 10, when the excitation current applied to the drive portion 13 is small and the thrust of the plunger 51 is zero or weak, a larger amount of pressure oil in the valve bore 21 and the spool bore 41 is discharged to the discharge portion T, resulting in a decrease of the pressure of the pressure oil in the valve bore 21 and the spool bore 41. When the excitation current applied to the drive portion 13 is large and the thrust of the plunger 51 is strong, a larger amount of pressure oil is supplied from the oil pressure source P into the valve bore 21 and the spool bore 41, resulting in an increase of the pressure of the pressure oil in the valve bore 21 and the spool bore 41. Further, when the excitation current applied to the drive portion 13 is in an intermediate range and the spool body 12 is positioned in the neutral position shown in Fig. 1B, the flow path connecting the valve bore 21 and the spool bore 41 to the oil pressure source P and the discharge portion T is blocked, and no pressure oil is supplied to or discharged from the valve bore 21 and the spool bore 41.

In the positive-type electromagnetic proportional valve 10 that exhibits the above behavior, the pressure oil having a desired pressure is supplied from the output hole 45 in accordance with the following mechanism.

The control unit (not shown) applies the excitation current preset for the desired pressure of the pressure oil to the drive portion 13. Thus, the plunger 51 of the drive portion 13 presses the spool body 12 in the forward axial direction Dx1 and positions the spool body 12 into the second slide position (see Fig. 1C), such that the outlet hole 43 is disconnected from the outlet port 32 and the inlet hole 43 communicates with the inlet port 31. As a result, the pressure oil is supplied from the oil pressure source P to the spool bore 41 and the valve bore 21, such that the pressure of the pressure oil in the spool bore 41 and the valve bore 21 is increased.

When the pressure of the pressure oil in the spool bore 41 and the valve bore 21 exceeds the desired pressure while the magnitude of the excitation current applied to the drive portion 13 is maintained, the spool body 12 is slid in the reverse axial direction Dx2 and positioned into the first slide position (see Fig. 1A). Thus, the inlet hole 44 is disconnected from the inlet port 31 and the outlet hole 43 communicates with the outlet port 32, and the pressure of the pressure oil in the spool bore 41 and the valve bore 21 is decreased.

When the pressure of the pressure oil in the spool bore 41 and the valve bore 21 falls below the desired pressure while the magnitude of the excitation current applied to the drive portion 13 is maintained, the spool body 12 is slid in the forward axial direction Dx1 and positioned into the second slide position (see Fig. 1C) again. Thus, the outlet hole 43 is disconnected from the outlet port 32 and the inlet hole 44 communicates with the inlet port 31, and the pressure of the pressure oil in the spool bore 41 is increased again.

As described above, the spool body 12 repeatedly moves between the second slide position (see Fig. 1C) and the first slide position (see Fig. 1A) while the excitation current preset for the desired pressure of the pressure oil is continuously applied to the drive portion 13, such that the pressure oil is repeatedly supplied to and discharged from the spool bore 41. Thus, the pressure of the pressure oil in the spool bore 41 and the valve bore 21 is maintained at the desired value, and the pressure oil having the desired pressure flows through the output hole 45 to the hydraulic actuator A.

As described above, in the electromagnetic proportional valve 10 of the embodiment, the excitation current applied to the drive portion 13 is controlled to adjust the degrees of opening of the valve bore 21 and the spool bore 41 to the oil pressure source P and the discharge portion T, such that the pressure oil having the desired pressure can be supplied from the output hole 45 to the hydraulic actuator A. When no excitation current is applied to the drive portion 13 and the pressure oil in the spool bore 41 and the valve bore 21 has a high pressure, the spool body 12 is positioned in the first slide position (see Fig. 1A), and the pressure oil in the spool bore 41 and the valve bore 21 is discharged to the discharge portion T via the outlet hole 43 and the outlet port 32.

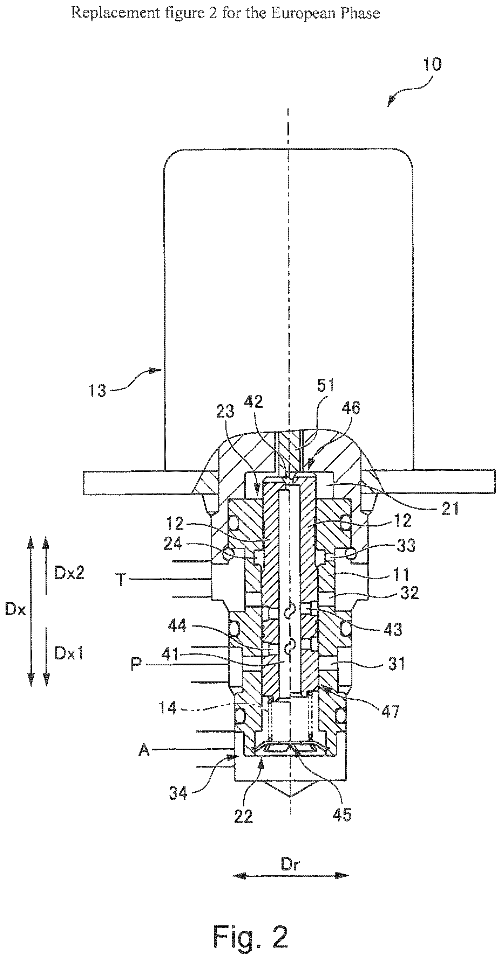

Fig. 2 shows a specific example of the positive-type electromagnetic proportional valve 10 not according to the present invention. In Fig. 2, the electromagnetic proportional valve 10 is partially shown in a sectional view.

Although the spool body 12 is horizontally symmetric with respect to the axial direction Dx, the left and right halves of the spool body 12 of Fig. 2 are shown in different states. More specifically, the left half of the spool body 12 of Fig. 2 is shown in the state where the spool body 12 is positioned in the neutral position (see Fig. 1B). On the other hand, the right half of the spool body 12 of Fig. 2 is shown in the state where the spool body 12 is positioned in the first slide position (see Fig. 1A) in which the inlet port 31 is disconnected from the inlet hole 44 and the outlet hole 43 communicates with the outlet port 32.

Although not shown in Fig. 2, the electromagnetic proportional valve 10 of Fig. 2 can enter the state where the spool body 12 is positioned in the second slide position (see Fig. 1C) in which the inlet port 31 communicates with the inlet hole 44 and the outlet hole 43 is disconnected from the outlet port 32.

The electromagnetic proportional valve 10 of Fig. 2 has basically the same configuration as the electromagnetic proportional valve 10 shown in Figs. 1A to 1C and exhibits the same behavior as the electromagnetic proportional valve 10 shown in Figs. 1A to 1C.

A difference between them is that the communication hole 42 of the electromagnetic proportional valve 10 shown in Figs. 1A to 1C is open in the radial direction Dr, whereas the communication hole 42 of the electromagnetic proportional valve 10 shown in Fig. 2 is open in the axial direction Dx (in particular, the reverse axial direction Dx2). Another difference is that the output port 34 of the electromagnetic proportional valve 10 shown in Figs. 1A to 1C is open in the axial direction Dx (in particular, the forward axial direction Dx1), whereas the output port 34 of the electromagnetic proportional valve 10 shown in Fig. 2 is open in the radial direction Dr, and therefore, the pressure oil from the output hole 45 is moved in the radial direction Dr via the large-diameter bore portion 22 and the output port 34 and supplied to the hydraulic actuator A.

As described above, in the above positive-type electromagnetic proportional valve 10, the large-diameter bore portion 22 and the small-diameter bore portion 23 communicate with each other via the spool bore 41, the communication hole 42, and the output hole 45, and therefore, the pressure of the pressure oil in the large-diameter bore portion 22, the pressure of the pressure oil in the small-diameter bore portion 23, and the pressure of the pressure oil in the spool bore 41 are equal. Therefore, the force substantially imparted to the spool body 12 by the pressure oil is a function of the difference Up between the surface area S1 of the spool body 12 that receives a force from the pressure oil in the valve bore 21 and the spool bore 41 (specifically, the small-diameter bore portion 23) in the forward axial direction Dx1 and the surface area S2 of the spool body 12 that receives a force from the pressure oil in the valve bore 21 and the spool bore 41 (specifically, the large-diameter bore portion 22 and the spool bore 41) in the reverse axial direction Dx2. Accordingly, the substantial increase of the force imparted to the spool body 12 by the pressure oil is moderate as compared to the increase of the pressure of the pressure oil supplied from the output hole 45, and thus a drive portion 13 (a solenoid actuator in the embodiment) having a small size can be used to produce a high oil pressure output.

In the electromagnetic proportional valve 10 of the embodiment, the output hole 45 is formed in an end portion of the spool body 12, and the output port 34 is formed in an end portion of the valve body 11. This increases the degree of freedom in arrangement of the output hole 45 and the output port 34. For example, it is possible that each of the output hole 45 and the output port 34 is open in both the axial direction Dx and the radial direction Dr.

In particular, when the output hole 45 is open in the axial direction Dx, the spool body 12 can have a small axial length. In addition, when the output port 34 is open in the axial direction Dx, the valve body 11 can have a small axial length. Thus, the electromagnetic proportional valve 10 as a whole can be compact. Further, the opening directions of the output hole 45 and the output port 34 can be adjusted in accordance with the specific position of the hydraulic actuator A relative to the electromagnetic proportional valve 10, such that the hydraulic actuator A can be positioned in various positions relative to the electromagnetic proportional valve 10. This is also favorable for device layout.

< Negative-type Electromagnetic Proportional Valve > (according to the invention)

For the negative-type electromagnetic proportional valve 10 described below, the same or similar components as in the positive-type electromagnetic proportional valve 10 (see Figs. 1A to 1C and Fig. 2) are denoted by the same reference signs and are not described in detail again.

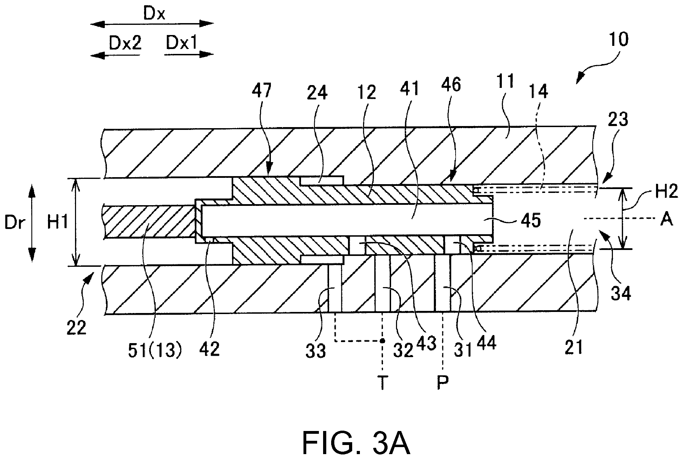

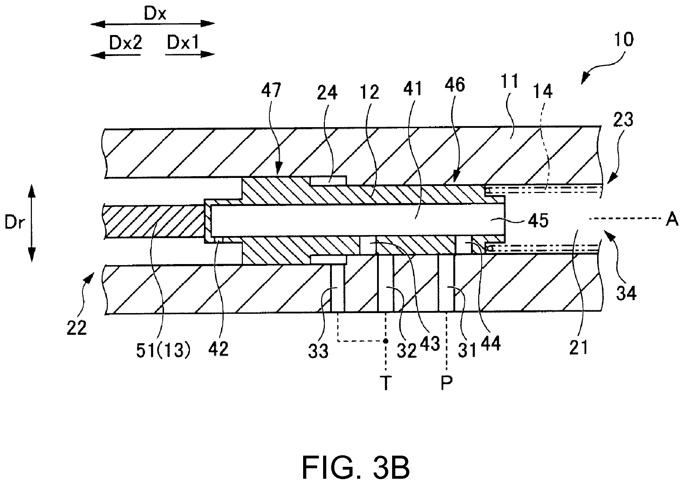

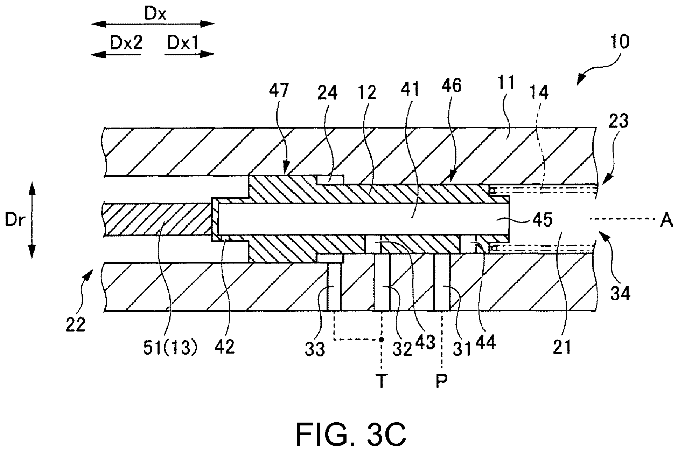

Figs. 3A to 3C are sectional views showing a schematic arrangement of a negative-type electromagnetic proportional valve 10. Fig. 3A shows a non-excited state where no excitation current flows through the drive portion 13, Fig. 3B shows a state where the spool body 12 is in the neutral state, and Fig. 3C shows a state where a relatively large excitation current flows through the drive portion 13.

In the embodiment, the small-diameter bore portion 23 of the valve bore 21 is adjacent to the forward axial direction Dx1 side of the large-diameter bore portion 22. Although not explicitly shown in Figs. 3A to 3C, each of the large-diameter bore portion 22 and the small-diameter bore portion 23 forms a closed space and is filled with the pressure oil supplied from the oil pressure source P. The small-diameter bore portion 23 communicates with an outside (in particular, the hydraulic actuator A in the embodiment) via the output port 34 (in particular, the output port 34 open toward the forward axial direction Dx1).

One end side (the left side in the Figs. 3A to 3C) of the spool body 12 is positioned in the large-diameter bore portion 22, and the other end side (the right side in the Figs. 3A to 3C) of the spool body 12 is positioned in the small-diameter bore portion 23. The one end side of the spool body 12 positioned in the large-diameter bore portion 22 includes the large-diameter spool portion 47 which has an outer diameter corresponding to the diameter of the large-diameter bore portion 22. The other end side of the spool body 12 positioned in the small-diameter bore portion 23 includes the small-diameter spool portion 46 which has an outer diameter corresponding to the diameter of the small-diameter bore portion 23. In this way, the large-diameter spool portion 47 is adjacent to the reverse axial direction Dx2 side of the small-diameter spool portion 46 and is positioned in the large-diameter bore portion 22. At least a part of the small-diameter spool portion 46 is positioned in the small-diameter bore portion 23, and a part of the small-diameter spool portion 46 is positioned in the large-diameter bore portion 22 in accordance with the position of the spool body 12 in the axial direction Dx.

The output hole 45 is formed in one of one end side and the other end side of the spool body 12 (the small-diameter spool portion 46 side in Figs. 3A to 3C), and the communication hole 42 is formed in the other (the large-diameter spool portion 47 side in Figs. 3A to 3C). The outlet hole 43 and the inlet hole 44 are formed in the small-diameter spool portion 46 of the spool body 12.

The communication hole 42 is open to the large-diameter bore portion 22 and thus communicates between the large-diameter bore portion 22 and the spool bore 41 irrespective of the position of the spool body 12 in the axial direction Dx. In accordance with the position of the spool body 12 in the axial direction Dx, the outlet hole 43 is open toward the outlet port 32 or the inner wall surface of the valve body 11 (in particular, the inner wall surface forming the small-diameter bore portion 23), and the inlet hole 44 is open toward the inlet port 31 or the inner wall surface of the valve body 11 (in particular, the inner wall surface forming the small-diameter bore portion 23).

The output hole 45 is open in the axial direction Dx (the forward axial direction Dx1 in Figs. 3A to 3C) and communicates with the output port 34 via the valve bore 21 (in particular, the small-diameter bore portion 23). The small-diameter bore portion 23 connected to the hydraulic actuator A via the output port 34 communicates with the spool bore 41 via one of the communication hole 42 and the output hole 45 (via the output hole 45 in Figs. 3A to 3C). The large-diameter bore portion 22 communicates with the spool bore 41 via the other of the communication hole 42 and the output hole 45 (via the communication hole 42 in Figs. 3A to 3C). Accordingly, the large-diameter bore portion 22 and the small-diameter bore portion 23 communicate with each other via the spool bore 41, the communication hole 42, and the output hole 45, and therefore, the pressure of the pressure oil in the large-diameter bore portion 22, the pressure of the pressure oil in the small-diameter bore portion 23, and the pressure of the pressure oil in the spool bore 41 are equal.

The drive portion 13 presses the spool body 12 in the forward axial direction Dx1, and a pressing force for pressing the spool body 12 varies in accordance with the excitation current. The biasing portion 14 biases the spool body 12 (the small-diameter spool portion 46 in the embodiment) toward the reverse axial direction Dx2. In this way, one of the one end side and the other end side of the spool body 12 (the large-diameter spool portion 47 side in Figs. 3A to 3C) is pressed by the plunger 51 of the drive portion 13, and the drive portion 13 applies a force to the spool body 12 in the forward axial direction Dx1. The other of the one end side and the other end side of the spool body 12 (the small-diameter spool portion 46 side in Figs. 3A to 3C) has the output hole 45 formed therein and is biased by the biasing portion 14, and the biasing portion 14 applies a force to the spool body 12 in the reverse axial direction Dx2.

The negative-type electromagnetic proportional valve 10 described above also has difference between pressure-receiving areas on the opposite sides of the spool body 12. With a balance between the hydraulic pressure produced by the difference between pressure-receiving areas, the thrust of the drive portion 13, and the biasing force of the biasing portion 14, the pressure oil having a desired pressure can be supplied from the output hole 45 to the hydraulic actuator A.

That is, the surface area of the spool body 12 that receives a force from the pressure oil filled in the valve bore 21 and the spool bore 41 in the forward axial direction Dx1 is different from the surface area of the spool body 12 that receives a force from the pressure oil in the reverse axial direction Dx2. More specifically, the surface area of the spool body 12 that receives a force from the pressure oil in the forward axial direction Dx1 is larger than the surface area of the spool body 12 that receives a force from the pressure oil in the reverse axial direction Dx2.

Therefore, the force F1 imparted to the spool body 12 by the pressure oil in the forward axial direction Dx1 is different from the force F2 imparted to the spool body 12 by the pressure oil in the reverse axial direction Dx2. In the electromagnetic proportional valve 10 shown in Figs. 3A to 3C, the relationship F1 > F2 is satisfied. Thus, the spool body 12 receives the force in the forward axial direction Dx1 from the pressure oil filled in the valve bore 21 and the spool bore 41. More specifically, the spool body 12 receives a force F0 from the pressure oil in the forward axial direction Dx1, the force F0 being calculated from F0 = F1 - F2 = {(the surface area of the spool body 12 that receives the force from the pressure oil in the forward axial direction Dx1) - (the surface area of the spool body 12 that receives a force from the pressure oil in the reverse axial direction Dx2)} × (the pressure of the pressure oil).

With Ph representing the pressure of the pressure oil in the valve bore 21 and the spool bore 41, Un representing the difference between the surface area S1 of the spool body 12 that receives the force from the pressure oil in the valve bore 21 and the spool bore 41 in the forward axial direction Dx1 and the surface area S2 of the spool body 12 that receives the force from the pressure oil in the reverse axial direction Dx2 (Un = S1 - S2), Fd representing the force imparted to the spool body 12 by the drive portion 13 in the forward axial direction Dx1, and Fsp representing the force imparted to the spool body 12 by the biasing portion 14 in the reverse axial direction Dx2, Expression 2 is satisfied as below.

Expression 2: $Fd = Fsp - Ph \times Un$

In the actual electromagnetic proportional valve 10, the value of Un is basically constant. In the electromagnetic proportional valve 10 of the embodiment in which the pressure oil is supplied to or discharged from the spool bore 41 and the valve bore 21 in accordance with the position of the spool body 12 in the axial direction Dx, the value of Fsp is within a certain range. Therefore, as is obvious from Expression 2 above, the pressure Ph of the pressure oil in the valve bore 21 and the spool bore 41 decreases with the increase of the force Fd imparted to the spool body 12 by the drive portion 13. Accordingly, a control unit (not shown) controls the excitation current applied to the drive portion 13 to adjust the force (Fd) imparted to the spool body 12 by the drive portion 13, such that the pressure oil having a desired pressure can be supplied to the hydraulic actuator A from the output hole 45 via the small-diameter portion 23 and the output port 34.

Next, a description is given of the behavior of the negative-type electromagnetic proportional valve 10 described above.

When no electric current is applied to the drive portion 13 or a first electric current is applied to the drive portion 13, the spool body 12 is positioned at a first slide position shown in Fig. 3A. At this time, the spool bore 41 communicates with the inlet port 31 via the inlet hole 44, and the pressure oil in the spool bore 41 and the pressure oil in the valve bore 21 have an increased pressure.

When a second electric current larger than the first electric current is applied to the drive portion 13, the spool body 12 is pressed by the plunger 51 of the drive portion 13 in the forward axial direction Dx1 and moved into a second slide position shown in Fig. 3C. At this time, the spool bore 41 communicates with the outlet port 32 via the outlet hole 43, and the pressure oil in the spool bore 41 and the pressure oil in the valve bore 21 have a decreased pressure. In the electromagnetic proportional valve 10 of the embodiment, the spool body 12 positioned in the first slide position (see Fig. 3A) is positioned on the reverse axial direction Dx2 side of the spool body 12 positioned in the second slide position (see Fig. 3C).

When a third electric current larger than the first electric current and smaller than the second electric current is applied to the drive portion 13, the spool body 12 is positioned in a third slide position shown in Fig. 3B. At this time, the outlet hole 43 does not communicate with the outlet port 32, and the inlet hole 44 does not communicate with the inlet port 31, and therefore, the pressure of the pressure oil in the spool bore 41 and the pressure oil in the valve bore 21 is basically maintained without a decrease or an increase thereof.

As described above, in the negative-type electromagnetic proportional valve 10, when the excitation current applied to the drive portion 13 is small and the thrust of the plunger 51 is zero or weak, a larger amount of pressure oil is supplied from the oil pressure source P into the valve bore 21 and the spool bore 41, resulting in an increase of the pressure of the pressure oil in the valve bore 21 and the spool bore 41. When the excitation current applied to the drive portion 13 is large and the thrust of the plunger 51 is strong, a larger amount of pressure oil is discharged to the discharge portion T, resulting in a decrease of the pressure of the pressure oil in the valve bore 21 and the spool bore 41. Further, when the excitation current applied to the drive portion 13 is in an intermediate range and the spool body 12 is positioned in the neutral position shown in Fig. 3B, the flow path connecting the valve bore 21 and the spool bore 41 to the oil pressure source P and the discharge portion T is blocked. Thus, no pressure oil is supplied to or discharged from the valve bore 21 and the spool bore 41, and the pressure of the pressure oil in the valve bore 21 and the spool bore 41 is maintained.

In the negative-type electromagnetic proportional valve 10 that exhibits the above behavior, the pressure oil having a desired pressure is supplied from the output hole 45 in accordance with the following mechanism.

With the valve bore 21 and the spool bore 41 filled with the pressure oil, the excitation current preset for the desired pressure of the pressure oil is applied to the drive portion 13. Thus, the plunger 51 of the drive portion 13 presses the spool body 12 in the forward axial direction Dx1 and positions the spool body 12 into the second slide position (see Fig. 3C), such that the inlet hole 44 is disconnected from the inlet port 31 and the outlet hole 43 communicates with the outlet port 32. Thus, the pressure of the pressure oil in the spool bore 41 and the valve bore 21 is decreased.

When the pressure of the pressure oil in the spool bore 41 and the valve bore 21 falls below the desired pressure while the magnitude of the excitation current applied to the drive portion 13 is maintained, the spool body 12 is slid in the reverse axial direction Dx2 and positioned into the first slide position (see Fig. 3A). Thus, the outlet hole 43 is disconnected from the outlet port 32 and the inlet hole 44 communicates with the inlet port 31, the pressure oil from the oil pressure source P is supplied to the spool bore 41 and the valve bore 21, and the pressure of the pressure oil in the spool bore 41 and the valve bore 21 is increased.

When the pressure of the pressure oil in the spool bore 41 and the valve bore 21 exceeds the desired pressure while the magnitude of the excitation current applied to the drive portion 13 is maintained, the spool body 12 is slid in the forward axial direction Dx1, and the inlet hole 44 is disconnected from the inlet port 31 and the outlet hole 43 communicates with the outlet port 32. Thus, the pressure of the pressure oil in the spool bore 41 and the valve bore 21 is decreased again.

As described above, the spool body 12 repeatedly moves between the second slide position (see Fig. 3C) and the first slide position (see Fig. 3A) while the excitation current preset for the desired pressure of the pressure oil is continuously applied to the drive portion 13, such that the pressure oil is repeatedly supplied to and discharged from the spool bore 41. Thus, the pressure of the pressure oil in the spool bore 41 and the valve bore 21 is maintained at the desired value, and the pressure oil having the desired pressure flows through the output hole 45 to the hydraulic actuator A.

When no excitation current is applied to the drive portion 13 and the pressure oil in the spool bore 41 and the valve bore 21 has a high pressure, the spool body 12 is positioned in the first slide position (see Fig. 3A), and the pressure oil from the oil pressure source P is supplied to the spool bore 41 and the valve bore 21 via the inlet hole 44 and the inlet port 31.

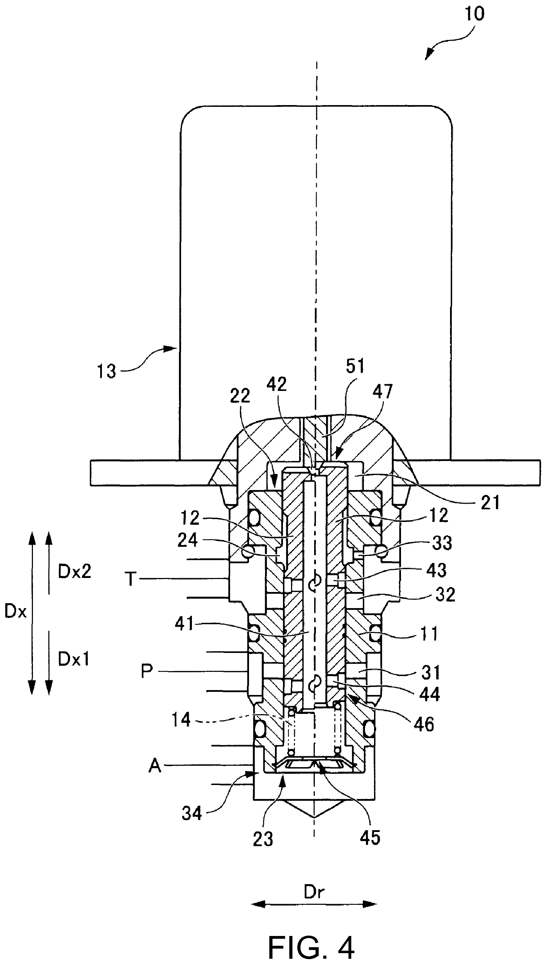

Fig. 4 shows a specific example of the negative-type electromagnetic proportional valve 10 according to an embodiment of the present invention. In Fig. 4, the electromagnetic proportional valve 10 is partially shown in a sectional view.

Although the spool body 12 is horizontally symmetric with respect to the axial direction Dx, the left and right halves of the spool body 12 of Fig. 4 are shown in different states. More specifically, the left half of the spool body 12 of Fig. 4 is shown in the state where the spool body 12 is positioned in the neutral position (see Fig. 3B). On the other hand, the right half of the spool body 12 of Fig. 4 is shown in the state where the spool body 12 is positioned in the first slide position (see Fig. 3A) in which the inlet port 31 communicates with the inlet hole 44 and the outlet hole 43 is disconnected from the outlet port 32.

Although not shown in Fig. 4, the electromagnetic proportional valve 10 of Fig. 4 can enter the state where the spool body 12 is positioned in the second slide position (see Fig. 3C) in which the inlet port 31 is disconnected from the inlet hole 44 and the outlet hole 43 communicates with the outlet port 32.

The electromagnetic proportional valve 10 of Fig. 4 has basically the same configuration as the electromagnetic proportional valve 10 shown in Figs. 3A to 3C and exhibits the same behavior as the electromagnetic proportional valve 10 shown in Figs. 3A to 3C.

A difference between them is that the communication hole 42 of the electromagnetic proportional valve 10 shown in Figs. 3A to 3C is open in the radial direction Dr, whereas the communication hole 42 of the electromagnetic proportional valve 10 shown in Fig. 4 is open in the axial direction Dx (in particular, the reverse axial direction Dx2). Another difference is that the output port 34 of the electromagnetic proportional valve 10 shown in Figs. 3A to 3C is open in the axial direction Dx (in particular, the forward axial direction Dx1), whereas the output port 34 of the electromagnetic proportional valve 10 shown in Fig. 4 is open in the radial direction Dr, and therefore, the pressure oil from the output hole 45 is moved in the radial direction Dr via the large-diameter bore portion 22 and the output port 34 and supplied to the hydraulic actuator A.

As described above, in the above negative-type electromagnetic proportional valve 10, the pressure of the pressure oil in the large-diameter bore portion 22, the pressure of the pressure oil in the small-diameter bore portion 23, and the pressure of the pressure oil in the spool bore 41 are equal. Therefore, the force substantially imparted to the spool body 12 by the pressure oil is a function of the difference Un between the surface area S1 of the spool body 12 that receives a force from the pressure oil in the valve bore 21 and the spool bore 41 (specifically, the large-diameter bore portion 22) in the forward axial direction Dx1 and the surface area S2 of the spool body 12 that receives a force from the pressure oil in the valve bore 21 and the spool bore 41 (specifically, the small-diameter bore portion 23 and the spool bore 41) in the reverse axial direction Dx2. Accordingly, the substantial increase of the force imparted to the spool body 12 by the pressure oil is moderate as compared to the increase of the pressure of the pressure oil supplied from the output hole 45, and thus a drive portion 13 having a small size can be used to produce a high oil pressure output.

In the electromagnetic proportional valve 10 of the embodiment, the output hole 45 is formed in an end portion of the spool body 12, and the output port 34 is formed in an end portion of the valve body 11. This increases the degree of freedom in arrangement of the output hole 45 and the output port 34. In particular, when the output hole 45 is open in the axial direction Dx, the spool body 12 can have a small axial length, and when the output port 34 is open in the axial direction Dx, the valve body 11 can have a small axial length. Thus, the electromagnetic proportional valve 10 as a whole can be compact. This is also favorable for device layout.

The invention is not limited to the above-described embodiments and variations. For example, various modifications may be made within the scope of the appended claims.

**Claims**

1. An electromagnetic proportional valve (10), comprising:

   a valve body (11) having a valve bore (21), an inlet port (31), an outlet port (32), and an output port (34), the valve bore (21) extending in an axial direction (Dx), the inlet port (31) communicating with an oil pressure source (P) for supplying a pressure oil and being open to the valve bore (21), the outlet port (32) communicating with a discharge portion (T) to which the pressure oil is discharged and being open to the valve bore (21), the output port (34) communicating with an object (A) to which the pressure oil is supplied and being open to the valve bore (21):

      a spool body (12) disposed in the valve bore (21) so as to be slidable in the axial direction (Dx), the spool body (12) having a spool bore (41) extending in the axial direction (Dx) and a communication hole (42), an outlet hole (43), an inlet hole (44), and an output hole (45) each being open to the spool bore (41);

a drive portion (13) for pressing the spool body (12) in a forward direction (DX1) of the axial direction (Dx), the drive portion (13) having a pressing force for pressing the spool body (12) that is variable in accordance with an applied electric current; and

a biasing portion (14) for biasing the spool body (12) in a reverse direction (Dx2) of the axial direction (Dx) opposed to the forward direction (DX1), wherein the output hole (45) communicates

with the output port (34), wherein the valve bore (21) includes a large-diameter bore portion (22) and a small-diameter bore portion (23), the large-diameter bore portion (22) having a first diameter (HI) in a radial direction (Dr) perpendicular to the axial direction (Dx), the small-diameter bore portion (23) having a second diameter (H2) smaller than the first diameter (H1) in the radial direction (Dr),

wherein one end side of the spool body (12) is positioned in the large- diameter bore portion (22), and another end side of the spool body (12) is positioned in the small-diameter bore portion (23), wherein the large-diameter bore portion (22) communicates with the spool bore (41) via one of the communication hole (42) and the output hole (45), and the small-diameter bore portion (23) communicates with the spool bore (41) via the other of the communication hole (42) and the output hole (45), and

wherein a surface area of the spool body (12) that receives a force from the pressure oil filled in the valve bore (21 ) and the spool bore (41 ) in the forward direction (DX1) is different from a surface area of the spool body (12) that receives a force from the pressure oil in the reverse direction (Dx2);

wherein

when no electric current is applied to the drive portion (13) or a first electric current is applied to the drive portion (13), the spool body (12) is positioned in a first slide position in which the spool bore (41) communicates with the inlet port (31) via the inlet hole (44), and

when a second electric current larger than the first electric current is applied to the drive portion (13), the spool body (12) is positioned in a second slide position in which the spool bore (41) communicates with the outlet port (32) via the outlet hole (43);

wherein the valve body (11) further has a drain port (33), the drain port (33) communicating with a drain portion to which the pressure oil is discharged and being open to the valve bore (21 ), **characterized in that**

the small-diameter bore portion (23) is positioned on a forward direction side of the large-diameter bore portion (22), the forward direction side facing the forward direction (DX1) of the axial direction (Dx),

wherein the spool body (12) includes a large-diameter spool portion (47) and a small-diameter spool portion (46) positioned adjacent to the forward direction side of the large-diameter spool portion (47), the large-diameter spool portion (47) having an outer diameter corresponding to a diameter of the large-diameter bore portion (22) and being positioned in the large-diameter bore portion (22), the small-diameter spool portion (46) having an outer diameter corresponding to a diameter of the small-diameter bore portion (23) and being at least partially positioned in the small-diameter bore portion (23), and

wherein a space (24) in the large-diameter bore portion (22) enclosed by the small-diameter spool portion (46), the large-diameter spool portion (47), and the valve body (11) communicates with the drain port (33).

2. The electromagnetic proportional valve (10) of claim 1, wherein the spool body (12) is configured such that one of the one end side and the other end side thereof is pressed by the drive portion (13), and the other of the one end side and the other end side thereof has the output hole (45).

3. . The electromagnetic proportional valve (10) according to claim 1 or 2 , wherein the output hole (45) is open in the axial direction (Dx).

4. The electromagnetic proportional valve (10) of any one of claims 1 to 3, wherein the outlet hole (43) and the inlet hole (44) are positioned between the communication hole (42) and the output hole (45) with respect to the axial direction (Dx).

5. The electromagnetic proportional valve (10) of claim 1,

wherein the spool body (12) receives a force from the pressure oil filled in the valve bore (21 ) and the spool bore (41 ) in the forward direction (DX1) of the axial direction (Dx), and

wherein the spool body (12) positioned in the first slide position is positioned on a reverse direction side of the spool body (12) positioned in the second slide position, the reverse direction side facing the reverse direction (Dx2) of the axial direction (Dx).

6. The electromagnetic proportional valve (10) of any one of claims 1 to 5,
wherein when a third electric current larger than the first electric current and smaller than the second electric current is applied to the drive portion (13), the spool body (12) is positioned in a third slide position in which the spool bore (41) is disconnected from the inlet port (31) and the outlet port (32).

**Patentansprüche**

1. Elektromagnetisches Proportionalventil (10), das umfasst:

einen Ventilkörper (11) mit einer Ventilbohrung (21), einer Einlassöffnung (31), einer Auslassöffnung (32) sowie einer Ausgabeöffnung (34), wobei sich die Ventilbohrung (21) in einer axialen Richtung (Dx) erstreckt, die Einlassöffnung (31) mit einer Öldruck-Quelle (P) zum Zuführen eines Drucköls in Verbindung steht und zu der Ventilbohrung (21) offen ist, wobei die Austragöffnung (32) mit einem Ableitabschnitt (T) in Verbindung steht, zu dem das Drucköl abgeleitet wird und der zu der Ventilbohrung (21) offen ist, die Ausgabeöffnung (34) mit einem Objekt (A) in Verbindung steht, dem das Drucköl zugeführt wird und das zu der Ventilbohrung (21) offen ist; einen Steuerkolbenkörper (12), der in der Ventilbohrung (21) so angeordnet ist, dass er in der axialen Richtung (Dx) verschoben werden kann, wobei der Steuerkolbenkörper (12) eine Steuerkolben-Bohrung (41), die sich in der axialen Richtung (Dx) erstreckt, sowie ein Verbindungsloch (42), ein Auslassloch (43), ein Einlassloch (44) und ein Ausgabeloch (45) aufweist, die jeweils zu der Steuerkolbenbohrung (41) offen sind; einen Antriebsabschnitt (13), mit dem der Steuerkolbenkörper (12) in einer Vorwärtsrichtung (DX1) der axialen Richtung (Dx) gedrückt wird, wobei der Antriebsabschnitt (13) über eine Drückkraft zum Drücken des Steuerkolbenkörpers (12) verfügt, die entsprechend einem angelegten Strom variieren kann; sowie einen Vorspannabschnitt (14), mit dem der Steuerkolbenkörper (12) in einer Rückwärtsrichtung (Dx2) der axialen Richtung (Dx) vorgespannt wird, die entgegengesetzt zu der vorwärts Richtung (DX1) ist, wobei das Ausgabeloch (45) mit der Ausgabeöffnung (34) in Verbindung steht, die Ventilbohrung (21) einen Bohrungsabschnitt (22) mit großem Durchmesser sowie einen Bohrungsabschnitt (23) mit kleinem Durchmesser enthält, der Bohrungsabschnitt (22) mit großem Durchmesser einen ersten Durchmesser (H1) in einer radialen Richtung (Dr) senkrecht zu der axialen Richtung (Dx) hat, der Bohrungsabschnitt (23) mit kleinem Durchmesser einen zweiten Durchmesser (H2) hat, der kleiner ist als der erste Durchmesser (H1) in der radialen Richtung (Dr), wobei eine Endseite des Steuerkolbenkörpers (12) in dem Bohrungsabschnitt (22) mit großem Durchmesser positioniert ist und eine andere Endseite des Steuerkolbenkörpers (12) in dem Bohrungsabschnitt (23) mit kleinem Durchmesser positioniert ist, der Bohrungsabschnitt (22) mit großem Durchmesser mit der Steuerkolbenbohrung (41) über das Verbindungsloch (42) oder das Ausgabeloch (45) in Verbindung steht und der Bohrungsabschnitt (23) mit kleinem Durchmesser mit der Steuerkolbenbohrung (41) über das andere von dem Verbindungsloch (42) und dem Ausgabeloch (45) in Verbindung steht, und

eine Oberfläche des Steuerkolbenkörpers (12), die eine Kraft von dem in die Ventilbohrung (21) und die Steuerkolbenbohrung (41) gefüllten Drucköl in der Vorwärtsrichtung (DX1) aufnimmt, sich von einer Oberfläche des Steuerkolbenkörpers (12) unterscheidet, die eine Kraft von dem Drucköl in der Rückwärtsrichtung (Dx2) aufnimmt, wobei,

wenn kein Strom an den Antriebsabschnitt (13) angelegt wird oder ein erster Strom an den Antriebsabschnitt (13) angelegt wird, der Steuerkolbenkörper (12) sich an einer ersten Gleitposition befindet, in der die Steuerkolbenbohrung (41) über das Einlassloch (44) mit der Einlassöffnung (31) in Verbindung steht, und

wenn ein zweiter Strom, der stärker ist als der erste Strom, an den Antriebsabschnitt (13) angelegt wird, sich der Steuerkolbenkörper (12) an einer zweiten Gleitposition befindet, in der die Steuerkolbenbohrung (41) über das Auslassloch (43) mit der Auslassöffnung (32) in Verbindung steht,

wobei der Ventilkörper (11) des Weiteren eine Abflussöffnung (33) aufweist und die Abflussöffnung (33) mit einem Abflussabschnitt in Verbindung steht, an den das Drucköl abgeleitet wird und der zu der Ventilbohrung (21) offen ist, **dadurch gekennzeichnet, dass** der Bohrungsabschnitt (23) mit kleinem Durchmesser an einer Vorwärtsrichtungs-Seite des Bohrungsabschnitts (22) mit großem Durchmesser positioniert ist, wobei die Vorwärtsrichtungs-Seite der Vorwärtsrichtung (DX1) der axialen Richtung (Dx) zugewandt ist, wobei der Steuerkolbenkörper (12) einen Steuerkolbenabschnitt (47) mit großem Durchmesser sowie einen Steuerkolbenabschnitt (46) mit kleinem Durchmesser enthält, der an die Vorwärtsrichtungs-Seite des Steuerkolbenabschnitts (47) mit großem Durchmesser angrenzend positioniert ist, der Steuerkolbenabschnitt (47) mit großem Durchmesser (47) einen Außendurchmesser hat, der einem Durchmesser des Bohrungsabschnitts (22) mit großem Durchmesser entspricht, und in dem Bohrungsabschnitt (22) mit großem Durchmesser positioniert ist, der Steuerkolbenabschnitt (46) mit kleinem Durchmesser (47) einen Außendurchmesser hat, der einem Durchmesser des Bohrungsabschnitts (23) mit kleinem Durchmesser entspricht, und wenigstens teilweise in dem Bohrungsabschnitt (23) mit kleinem Durchmesser positioniert ist, und

wobei ein Raum (24) in dem Bohrungsabschnitt (22) mit großem Durchmesser, der von dem Steuerkolbenabschnitt (46) mit kleinem Durchmesser, dem Steuerkolbenabschnitt (47) mit großem Durchmesser und dem Ventilkörper (11) umschlossen wird, mit der Abflussöffnung (33) in Verbindung steht.

2. Elektromagnetisches Proportionalventil (10) nach Anspruch 1, wobei der Steuerkolbenkörper(12) so ausgeführt ist, dass die eine Endseite oder die andere Endseite desselben von dem Antriebsabschnitt(13) gedrückt wird und die andere von der einen Endseite und der anderen Endseite desselben das Ausgabeloch (45) aufweist.

3. Elektromagnetisches Proportionalventil (10) nach Anspruch 1 oder 2, wobei das Ausgabeloch (45) in der axialen Richtung (Dx) offen ist.

4. Elektromagnetisches Proportionalventil (10) nach einem der Ansprüche 1 bis 3, wobei das Auslassloch (43) und das Einlassloch (44) in Bezug auf die axiale Richtung (Dx) zwischen dem Verbindungsloch (42) und dem Ausgabeloch (45) positioniert sind.

5. Elektromagnetisches Proportionalventil (10) nach Anspruch 1,

wobei der Steuerkolbenkörper (12) eine Kraft von dem in die Ventilbohrung (21) und die Steuerkolbenbohrung (41) gefüllten Drucköl in der Vorwärtsrichtung (DX1) der axialen Richtung (Dx) empfängt; und
der in der ersten Gleitposition befindliche Steuerkolbenkörper (12) eine Position an einer Rückwärtsrichtungs-Seite des in der zweiten Gleitposition befindlichen Steuerkolbenkörpers (12) einnimmt, wobei die Rückwärtsrichtungs-Seite der Rückwärtsrichtung (Dx2) der axialen Richtung (Dx) zugewandt ist.

6. Elektromagnetisches Proportionalventil (10) nach einem der Ansprüche 1 bis 5,

wobei, wenn ein dritter Strom, der stärker ist als der erste Strom und schwächer als der zweite Strom, an den Antriebsabschnitt (13) angelegt wird, der Steuerkolbenkörper (12) in eine dritte Gleitposition gebracht wird, in der die Steuerkolbenbohrung (41) von der Einlassöffnung (31) und der Auslassöffnung (32) getrennt ist.

## Revendications

1. Vanne proportionnelle électromagnétique (10), comprenant :

un corps de vanne (11) présentant un alésage de vanne (21), un orifice d'admission (31), un orifice de décharge (32) et un orifice de sortie (34), l'alésage de vanne (21) s'étendant dans une direction axiale (Dx), l'orifice d'admission (31) communiquant avec une source de pression d'huile (P) pour fournir une huile de pression et étant ouvert sur l'alésage de vanne (21), l'orifice de décharge (32) communiquant avec une partie de décharge (T) vers laquelle l'huile de pression est déchargée et étant ouvert sur l'alésage de vanne (21), l'orifice de sortie (34) communiquant avec un objet (A) auquel l'huile de pression est fournie et étant ouvert sur l'alésage de vanne (21) ;
un corps de tiroir (12) disposé dans l'alésage de vanne (21) de manière à pouvoir coulisser dans la direction axiale (Dx), le corps de tiroir (12) ayant un alésage de tiroir (41) s'étendant dans la direction axiale (Dx) et un trou de communication (42), un trou de décharge (43), un trou d'admission (44) et un trou de sortie (45), chacun étant ouvert sur l'alésage de tiroir (41) ;
une partie d'entraînement (13) pour presser le corps de tiroir (12) dans une direction avant (DX1) de la direction axiale (Dx), la partie d'entraînement (13) ayant une force de pression pour presser le corps de tiroir (12) qui est variable en fonction d'un courant électrique appliqué ; et
une partie de précontrainte (14) pour précontraindre le corps de tiroir (12) dans une direction inverse (Dx2) de la direction axiale (Dx) opposée à la direction avant (DX1),
où le trou de sortie (45) communique avec l'orifice de sortie (34), où l'alésage de vanne (21) inclut une partie d'alésage de grand diamètre (22) et une partie d'alésage de petit diamètre (23), la partie d'alésage de grand diamètre (22) ayant un premier diamètre (HI) dans une direction radiale (Dr) perpendiculaire à la direction axiale (Dx), la partie d'alésage de petit diamètre (23) ayant un deuxième diamètre (H2) inférieur au premier diamètre (H1) dans la direction radiale (Dr),

où un côté d'extrémité du corps de tiroir (12) est positionné dans la partie d'alésage de grand diamètre (22), et un autre côté d'extrémité du corps de tiroir (12) est positionné dans la partie d'alésage de petit diamètre (23),

où la partie d'alésage de grand diamètre (22) communique avec l'alésage de tiroir (41) via l'un parmi le trou de communication (42) et le trou de sortie (45), et où la partie d'alésage de petit diamètre (23) communique avec l'alésage de tiroir (41) via l'autre parmi le trou de communication (42) et le trou de sortie (45), et

où une surface du corps de tiroir (12) qui reçoit une force de l'huile de pression introduite dans l'alésage de vanne (21) et l'alésage de tiroir (41) dans la direction avant (DX1) est différente d'une surface du corps de tiroir (12) qui reçoit une force de l'huile de pression dans la direction inverse (Dx2)

où

lorsque aucun courant électrique n'est appliqué à la partie d'entraînement (13) ou lorsqu'un premier courant électrique est appliqué à la partie d'entraînement (13), le corps de tiroir (12) est positionné dans une première position de coulissement dans laquelle l'alésage de tiroir (41) communique avec l'orifice d'admission (31) par l'intermédiaire du trou d'admission (44), et lorsqu'un deuxième courant électrique plus important que le premier courant électrique est appliqué à la partie d'entraînement (13), le corps de tiroir (12) est positionné dans une deuxième position de coulissement dans laquelle l'alésage de tiroir (41) communique avec l'orifice de décharge (32) par l'intermédiaire du trou de décharge (43) ;

où le corps de vanne (11) présente en outre un orifice de vidange (33), l'orifice de vidange (33) communiquant avec une partie de vidange vers laquelle l'huile de pression est évacuée et étant ouvert sur l'alésage de vanne (21),

**caractérisée en ce que**

la partie d'alésage de petit diamètre (23) est positionnée sur un côté de direction avant de la partie d'alésage de grand diamètre (22), le côté de direction avant faisant face à la direction avant (DX1) de la direction axiale (Dx),

où le corps de tiroir (12) inclut une partie de tiroir de grand diamètre (47) et une partie de tiroir de petit diamètre (46) positionnée de manière adjacente au côté de direction avant de la partie de tiroir de grand diamètre (47), la partie de tiroir de grand diamètre (47) ayant un diamètre extérieur correspondant à un diamètre de la partie d'alésage de grand diamètre (22) et étant positionnée dans la partie d'alésage de grand diamètre (22), la partie de tiroir de petit diamètre (46) ayant un diamètre extérieur correspondant à un diamètre de la partie d'alésage de petit diamètre (23) et étant au moins partiellement positionnée dans la partie d'alésage de petit diamètre (23), et

où un espace (24) dans la partie d'alésage de grand diamètre (22) entouré par la partie de tiroir de petit diamètre (46), la partie de tiroir de grand diamètre (47) et le corps de vanne (11) communique avec l'orifice de vidange (33).

2. Vanne proportionnelle électromagnétique (10) de la revendication 1, où le corps de tiroir (12) est configuré de telle sorte que l'un parmi un de ses côtés d'extrémité et l'autre de ses côtés d'extrémité est pressé par la partie d'entraînement (13), et que l'autre parmi un de ses côtés d'extrémité et l'autre de ses côtés d'extrémité présente le trou de sortie (45).

3. Vanne proportionnelle électromagnétique (10) selon la revendication 1 ou 2, où le trou de sortie (45) est ouvert dans la direction axiale (Dx).

4. Vanne proportionnelle électromagnétique (10) de l'une quelconque des revendications 1 à 3, où le trou de décharge (43) et le trou d'admission (44) sont positionnés entre le trou de communication (42) et le trou de sortie (45) par rapport à la direction axiale (Dx).

5. Vanne proportionnelle électromagnétique (10) de la revendication 1,

où le corps de tiroir (12) reçoit une force de l'huile de pression introduite dans l'alésage de vanne (21) et l'alésage de tiroir (41) dans la direction avant (Dx1) de la direction axiale (Dx), et où le corps de tiroir (12) positionné dans la première position de coulissement est positionné sur un côté de direction inverse du corps de tiroir (12) positionné dans la deuxième position de coulissement, le côté de direction inverse faisant face à la direction inverse (Dx2) de la direction axiale (Dx).

6. Vanne proportionnelle électromagnétique (10) de l'une quelconque des revendications 1 à 5, où lorsqu'un troisième courant électrique plus grand que le premier courant électrique et plus petit que le deuxième courant électrique est appliqué à la partie d'entraînement (13), le corps de tiroir (12) est positionné dans une troisième position de coulissement dans laquelle l'alésage de tiroir (41) est déconnecté de l'orifice d'admission (31) et de l'orifice de décharge (32).

FIG. 1A

FIG. 1B

FIG. 1C

EP 3 604 875 B1

Replacement figure 2 for the European Phase

Fig. 2

18

FIG. 3A

FIG. 3B

FIG. 3C

FIG. 4

**EP 3 604 875 B1**

## REFERENCES CITED IN THE DESCRIPTION

### Patent documents cited in the description

- US 20150000774 A1
- JP HEI2163583 B